# EUROPEAN PATENT APPLICATION

(11) **EP 3 345 737 A1**
(43) Date of publication of application: **11.07.2018**
(21) Application number: 15902857.0
(22) Date of filing: 02.09.2015
(51) Int. Cl.: B29C 45/14, B29C 70/76, F16L 25/03, F16L 47/20

(54) **SYSTEM FOR CONNECTION BETWEEN PARTS OF A STRUCTURE**

(71) Applicant: Simplicity Works Europe, S.L., 03205 Elche (Alicante) (ES)
(72) Inventor: HERNÁNDEZ HERNÁNDEZ, Adrian, Monforte Del Cid (Alicante) 03670 (ES)
(74) Representative: Carvajal y Urquijo, Isabel
(86) International application number: PCT/ES2015/070644
(87) International publication number: WO 2017/037306

(57) **Abstract**

A system for connection between parts of a structure, comprising providing the parts (1, 2, 3 and 4) to be connected with elements in the form of ribs or drill holes (5), on the surfaces of zones or areas of connection of said parts; placing the parts to be connected in a mold (7), in the relative position they will occupy within the structure, with the ribs or drill holes (5) inside said mold; and injecting, into the mold, a resin or melted adhesive plastic such that it fills the drill holes (5), the inner holes of the parts and the spaces (8) defined therebetween.

## Description

### Field of the invention

The present invention relates to a system for connection between parts of a structure and more specifically, parts of a structure that meet in an intersection area, especially parts or components of a rigid or semi-rigid nature, for example, which make up part of the structure of a building, of the frame of a vehicle or bicycle, of any other reinforcement, and that can make up a flat or three-dimensional structure.

The method of the invention enables carrying out the connection of the components of a structure that meet each other in a simple and cheap way, while at the same time enabling a coating of the connection area and, if desired, of the surfaces adjacent to said area to be obtained, a coating which can be intended to provide mechanical or decorative properties to the assembly and/or define the corresponding surface seen.

### Background of the invention

Traditionally, the connection between parts that meet each other has been carried out by different systems, depending on the nature of the components to be connected. When connecting metal parts, the classic connection systems are welding, screwing and riveting. Similar systems are used for the joints of plastic parts.

The common denominator of all these techniques is the needing more manpower, with high specialization, which contributes considerably to the final costs of the product.

In certain cases, such as the automobile industry, the automation of the connection operations has been achieved by means of robots which require very expensive installations and even though they enable significant production levels, they require large investments which limit the use thereof.

When the components to be connected are of a composite type, such as carbon fibers, the connection processes are complicated as well as expensive.

### Description of the invention

The object of the present invention is a method for connecting components of a structure that meet each other, which is independent from the nature of the components to be connected and also from the relative position in which the parts or components meet in order to form a flat or tridimensional structure.

The connection method of the invention comprises the following steps:
a) a) Providing the parts that are to be connected, starting from the surfaces of the zones or areas of connection thereof, with formations that modify the topography of said surfaces; b) Preparing a mold that reproduces, in negative, the volume of the areas of the structure corresponding to the connection of said parts;
b) c) Placing inside of said mold the areas of the parts to be connected that include the cited formations, in the relative position that they will occupy within the structure to be formed;
c) d) Injecting into the mold an adhesive plastic or resin in a melted state in fluidity and pressure conditions that ensure the coating of the zones or areas of connection of the parts to be connected and the adaptation and adherence thereof over said zones or areas and on the formations made thereon; e) Proceeding to cool the assembly until the plastic or resin is solidified or cured in order to proceed to open the mold and extract the assembly of connected parts.

The cited formations can consist of channels, recesses or holes made on the zones or areas of connection that will also be located inside the mold and will be filled with the injected plastic or resin. Preferably, these formations will be made in the parts to be connected in a direction perpendicular to that of the forces that must support said parts.

The mentioned formations must also consist of protrusions or ribs formed on the outer surface of the zones or areas of connection of the parts to be connected.

The parts to be connected can have a laminar structure, in which case the holes will cross through the parts. In the case of the parts to be connected have a tubular structure, the holes will cross through the wall of the parts and the tubular structure will be closed immediately behind the section occupied by said holes, in order to limit the penetration of the melted plastic or resin in the injection operation.

Around the area of connection between the parts that make up the structure, a plastic or resin coating can be formed by means of the same injection operation carried out to connect the parts or even by means of a subsequent injection operation with a different plastic or resin.

With the method of the invention connections between parts can be carried out by means of the injection of an adhesive plastic or resin, in a melted state, which act as a double mechanical connection by way of welding, (for the adherence of the injected plastic, once solidified, to the surfaces of the occupied areas) and by way of screws or rivets, for the solidified plastic core that occupies the holes or recesses.

The connection method of the invention also enables, on the area of connection between parts, a coating to be obtained based on the same injected plastic in order to carry out the connection or with another different one, compatible with the first one. When the plastic used to achieve the coating is the same as the one used for the connection between parts, the complete operation, connection and coating, can be achieved in a single mold, in which the parts to be connected will be placed, and in a single injection operation. When the plastic used for the coating is different than the one used for the connection between parts, two molds and two injection operations will be used, one to complete the connection between parts, in which said parts to be connected are positioned and the injection of the corresponding plastic or resin is performed, and another with greater volume and with the shape of the coating, in which the already connected parts are positioned and a second injection is performed, with the plastic or resin that will make up the coating. The coating material used in the second injection can be an expanded type, for lightness and resistance against impacts.

In the second case, a second mold will be arranged in which the structure previously formed by means of the first injection will be placed, delimiting the space between this second mold and said structure, which will be filled with the second injection by means of which a coating can be obtained over certain areas or surfaces of the structure.

When a second mold is used for the second injection, to obtain a coating, said second mold can be designed with cavities or configurations intended for the placement of inserts or parts that can later make up a portion of the coating, for example like outer decorative skin, metal reinforcing elements, etc.

The additional inserts or parts intended to be mounted in the second mold, before carrying out the second injection, can be arranged on flexible laminar templates that are in turn fastened on the inner surface of the mold, thus facilitating the placement of the inserts. Furthermore, the use of the mentioned template would be useful for removing, from the surface of the structure formed, lines corresponding to the separations between the parts that form the mold.

The method of the invention:
- Enables welding or mechanical connections between parts of any nature to be substituted by a connection of the components thereof by means of resins or plastic materials.
- Achieves lighter structures with respect to the structure with welded or screwed connections.
- Applies decorative parts or coatings by means of a second injection operation.
- Simplifies the connection processes between components of a structure.

### Brief description of the drawings

A non-limiting exemplary embodiment is shown in the accompanying drawings, where:
- Figure 1 is a plan view of the components or parts to be connected, with a tubular configuration, for the formation of a structure.
- Figure 2 corresponds to the detail A of Figure 1, with a diametral cross section and on a larger scale.
- Figure 3 shows the part of Figure 1 inside the mold in which the connection thereof will be completed.
- Figure 4 shows the same parts, already connected.
- Figure 5 is a cross section of the connection, taken according to the cross-section line V-V of Figure 4.
- Figure 6 is a similar view to that of Figure 3, showing a variant embodiment.
- Figure 7 shows a cross section of the connection between parts with a flat or laminar configuration.
- Figure 8 shows a perspective view of a second variant embodiment.

### Detailed description of an embodiment

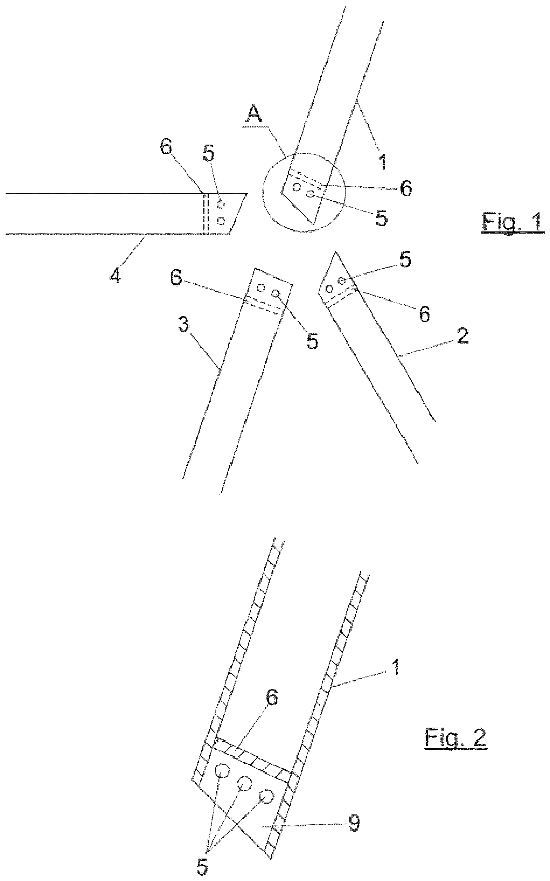

In Figure 1, four tubular parts or components are represented (1, 2, 3 and 4), that must be connected in order to form a structure, flat in the described example, said components being shown in the positions that they will occupy within the structure to be formed.

According to the invention, the parts (1, 2, 3 and 4) to be connected are equipped, close to the areas of connection, with formations that in the examples shown consist of holes (5) that cross through the walls of said parts, as better seen in Figure 2. If the walls are very thick or if the parts to be connected are solid, the holes (5) can cross through said walls or parts only partially, starting from one of the surfaces thereof.

In any case, the holes (5) are made in the direction perpendicular to the direction in which the forces act in each of the parts, inside the structure of which they will make up part.

The tubular parts are closed, in a subsequent section close to the section in which the holes (5) are located by means of a transversal partition (6).

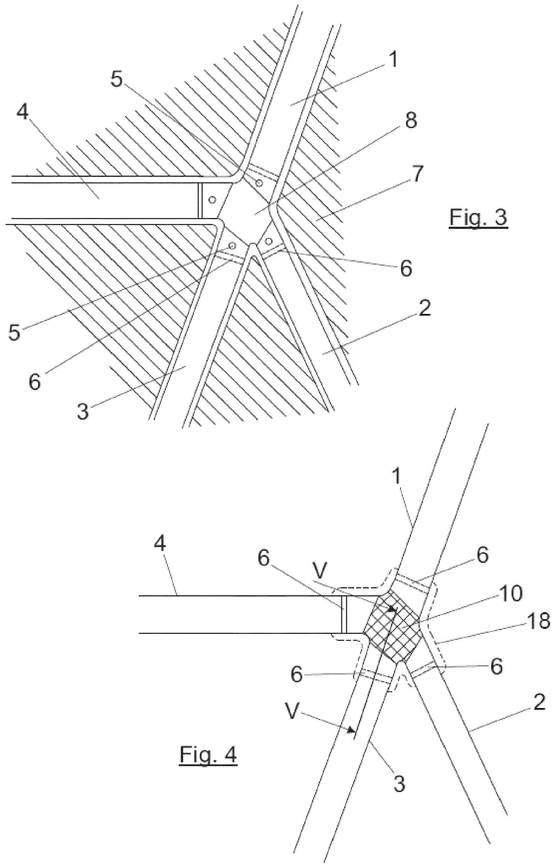

The assembly of parts (1, 2, 3 and 4), with the holes (5) and partitions (6) is positioned inside a mold (7) Figure 3, which covers the volume of the area of the structure made up by the connection of the four parts. In this mold a resin or adhesive plastic is injected in a melted state. The injection is carried out at a pressure and degree of fluidity of the plastic or resin that is enough for it to fill the limited space (8) between the parts (1, 2, 3 and 4), the inner volume (9) of the four pieces limited by the partition (6) and furthermore penetrate and fill the holes (5).

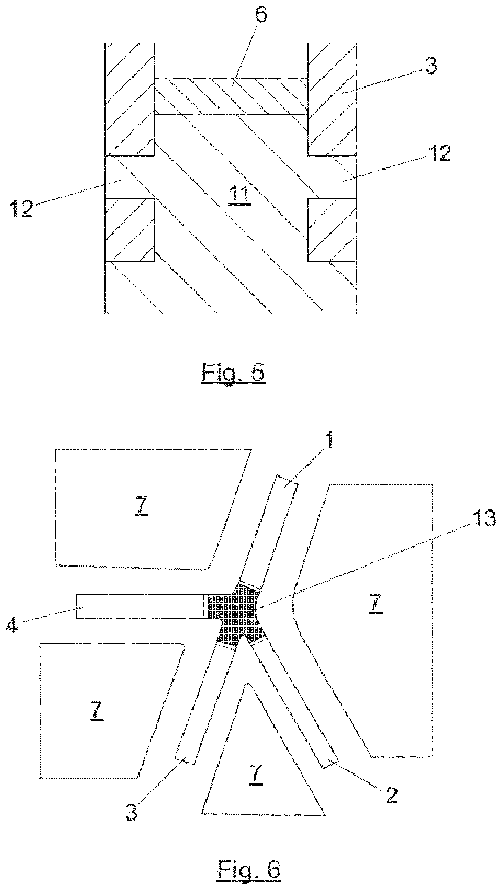

In Figures 4 and 5, the already connected parts (1, 2, 3 and 4) are shown, once the injected resin or plastic is cured and the assembly of the mold (7) is extracted, with an intermediate plastic or resin core (10), a cylinder (11) that fills the inside of the tubular parts up to the partition (6) and is adhered to the inner surface of the wall of said parts, and stoppers (12) that act by way of rivets or mechanical connecting elements.

The holes (5) will be made in the parts to be connected in the direction perpendicular to the direction in which the forces act, which must support the structure through each part.

By means of the method of the invention, for each of the parts the connection achieved acts with a double effect: a) For the adherence of the resin injected on the walls of the part to be connected, and b) for the mechanical action of the stoppers (12) inside the holes (5).

In the area of connection, a coating (12) can furthermore be obtained, adequately scaling the cavities or gaps of the mold (7), based on the same plastic or resin used for the connection between parts, or by means of a second injection with a different plastic or resin.

As shown in Figure 5, in the space (8) delimited between the parts to be connected inside the mold (7), fibers (13) of a resistant nature can be arranged, for example carbon fibers, that can or cannot penetrate into the tubular parts and that would stay occluded in the injected resin or plastic, increasing or reinforcing the effect thereof.

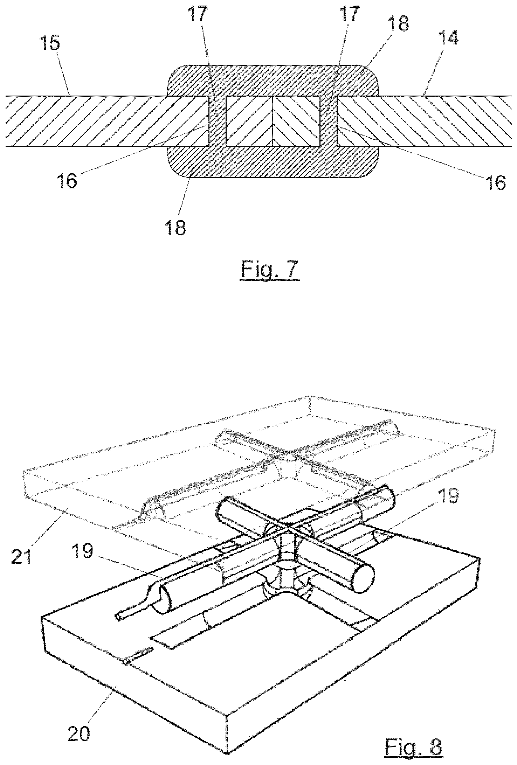

In Figure 7, the butt connection between two essentially flat parts (14 and 15), in which holes (16) are made close to the joint, is shown. By means of the corresponding mold, not shown, an adhesive plastic or resin is injected that will make up stoppers (17) that fill the holes (16) as well as a coating (18) over the parts (14 and 15), which acts with the stoppers (17) by way of rivets.

The system for connection of the invention is applicable in the connection of parts of any nature and configuration that aim to make up a portion of an assembly with a flat or spatial structure.

The areas of the parts to be connected can be subject, before the arrangement thereof in the mold, to chained treatments to ensure the sticking or connection between the injected material and the parts to be connected.

The model (7) furthermore can have cavities that, upon being filled with the injected material, provide reinforcing or decorative elements. In Figure 8, a variant embodiment is shown in which the formations with which the parts to be connected (1, 2, 3, 4) are provided consist of ribs (19) that can run along the surfaces of the areas or zones of the parts to be connected in a longitudinal, transversal or tilted direction. These formations, as well as the possible coating of the areas to be connected, will be obtained by means of two semi-molds (20-21) that reproduce the volume and shape of the structure to be obtained in negative, by the surfaces thereof that face each other.

## Claims

1. A system for connection between parts of a structure, especially between parts of a rigid or semi-rigid nature that meet each other inside the structure in one point, line or area of said structure, **characterized in that** it comprises:
a) a) Providing the parts (1, 2, 3, 4) that are to be connected, starting from the surfaces of the zones or areas of connection thereof, with formations that modify the topography of said surfaces; b) Preparing a mold (7) that reproduces, in negative, the volume of the areas of the structure corresponding to the connection of said parts;
b) c) Placing inside of said mold the areas of the parts to be connected that include the cited formations, in the relative position that they will occupy within the structure to be formed;
c) d) Injecting into the mold an adhesive plastic or resin in a melted state in fluidity and pressure conditions that ensure the coating of the zones or areas of connection of the parts to be connected and the adaptation or adherence thereof over said zones or areas and on the formations made thereon;
d) e) Proceeding to cool the assembly until the plastic or resin is solidified or cured in order to proceed to open the mold and extract the assembly of connected parts.

2. The system according to claim 1, **characterized in that** the cited formations consist of projecting protrusions or ribs (19) located on the outer surface of the zones or areas of connection of the parts to be connected.

3. The system according to claim 1, **characterized in that** the cited formations consist of recesses or holes (5) made on the outer surface of the zones or areas of connection of the parts to be connected.

4. The system according to claim 3, **characterized in that** when the parts have a laminar structure, the holes cross through said parts.

5. The system according to claim 1, **characterized in that** the recesses or holes (5) are made in the parts to be connected (1, 2, 3, 4) in the direction perpendicular to the direction of the forces act which must support said parts.

6. The system according to claim 1, **characterized in that** a filling of resistant fibers (13), which are occluded inside the mass of injected plastic or resin, is arranged between the parts to be connected.

7. The system according to claim 1, **characterized in that** by means of the cited injection a coating layer (18) is created around the parts to be connected, in the area of connection.

8. The system according to claim 1, **characterized in that** the surface of the parts to be connected is subjected, in the areas of connection and before the inclusion thereof in the mold, to a treatment that ensures the fixation between said areas and the injected material.

9. The system according to claim 6, **characterized in that** the coating layer is obtained by means of a second injection of an adhesive plastic or resin in a melted state, that is carried out in a second mold in which the structure obtained with the first injection is previously arranged.

10. The system according to claim 6, **characterized in that** the coating layer includes inserts of a rigid or flexible nature.
